# EUROPEAN PATENT APPLICATION

(11) **EP 4 512 668 A1**
(43) Date of publication of application: **26.02.2025**
(21) Application number: 24176313.5
(22) Date of filing: 16.05.2024
(51) Int. Cl.: B60R 11/00, B60R 11/02

(54) **BASE STATION FOR MOUNTING VEHICLE ACCESSORIES**

(30) Priority: 25.08.2023 CN 202311085073
(71) Applicant: Shenzhen Microgravity Technology Co., Ltd, Shenzhen Guangdong (CN)
(72) Inventor: ZHANG, Shuai, SHENZHEN (CN); ZHAO, Zhiqiang, SHENZHEN (CN); LIU, Changjiang, SHENZHEN (CN); CHEN, Liwei, SHENZHEN (CN); SUN, Guoqing, SHENZHEN (CN)
(74) Representative: Zaboliene, Reda

(57) **Abstract**

The present application discloses a base station for mounting vehicle accessories. The base station includes a first guide rail, a second guide rail and a mounting portion. The first guide rail and the second guide rail are mounted on the back side of the vehicle-mounted display screen, and the second guide rail is connected to the first guide rail; the first guide rail and the second guide rail are used to mount multiple vehicle accessories at the same time, the mounting portion is connected to at least one of the first guide rail and the second guide rail, the first guide rail and the second guide rail are fixed to the vehicle-mounted display screen via the mounting portion. The base station for mounting vehicle accessories of the present application can reduce damage to the vehicle-mounted display screen caused by the mounting of vehicle accessory.

## Description

### TECHNICAL FIELD

The present application relates to the technical field of multifunctional mounting brackets, and in particular to a base station for mounting vehicle accessories.

### BACKGROUND

With the popularity of cars and new energy vehicles in individuals, families, and public transportation, the user needs generated by users (including drivers or passengers) in the cars are becoming more and more diverse. For example, many people will equip their cars with some vehicle accessories to meet different needs. Most vehicle accessories need to be mounted and fixed in the cab. These vehicle accessories include various brackets for clamping and fixing mobile phones and other electronic products.

Currently, vehicle accessories such as brackets on the market generally only support the placement and fixation of a single electronic product. For example, a mobile phone holder is only used to mount and fix a mobile phone in the car. If the user needs to use multiple mobile phones at the same time, multiple mobile phone holders are required. Taking mobile phone holders as an example, the mounting and fixation methods of vehicle accessories include adhesive fixation, buckle fixation, clamp arm fixation, suction cup fixation, etc. The mounting and fixation locations generally include air outlets, center consoles, display screens, vehicle glass and other interior vehicle components or interiors. No matter which method is used, the position of the vehicle accessories is relatively fixed after mounting. If user wants to move the vehicle accessories, user needs to remove it and remount it in a new position, which can easily cause damage to the vehicle components or interior. In addition, if there are multiple vehicle accessories that need to be mounted and used at the same time, the mounting methods of the multiple vehicle accessories may be very different and distributed in different parts of the car, which is inconvenient to use and can easily cause confusion in the car layout, affecting the driving experience or driving safety.

Therefore, how to improve the user experience of vehicle accessories is an urgent technical problem that needs to be solved by those skilled in the art.

### SUMMARY

The purpose of the embodiments of the present application is to provide a base station for mounting vehicle accessories to solve the technical problem in the prior art that the mounting of vehicle accessories easily damages the equipment in the vehicle.

A base station for mounting vehicle accessories, which includes:
a first guide rail mounted on a back side of a vehicle-mounted display screen;
a second guide rail mounted on the back side of the vehicle-mounted display screen and connected to the first guide rail, wherein the first guide rail and the second guide rail are used to mount a plurality of vehicle accessories at the same time; and
a mounting portion connected to at least one of the first guide rail and the second guide rail, wherein the first guide rail and the second guide rail are fixed to the vehicle-mounted display screen via the mounting portion.

In some embodiments, the multiple vehicle accessories are adapted to move along the first guide rail or the second guide rail to change the position.

In some embodiments, the vehicle accessories clamp or are clamped by the first guide rail and/or the second guide rail and configured to slide along the first guide rail and/or the second guide rail when an external force is applied.

In some embodiments, the first guide rail or the second guide rail includes a guide rail connection structure, and each of the vehicle accessories respectively includes a connecting portion, and the connecting portion is structural adapted with the guide rail connection structure as to mount the multiple vehicle accessories to the first guide rail and/or the second guide rail.

In some embodiments, the guide rail connection structure is a rack provided on a surface of the first guide rail and/or the second guide rail.

In some embodiments, the first guide rail is provided along a top edge of the vehicle-mounted display screen, and the second guide rail is provided along a bottom edge or a side edge of the vehicle-mounted display screen.

In some embodiments, the base station further includes a central skeleton located on the back side of the vehicle-mounted display screen, and the second guide rail is connected to the first guide rail through the central skeleton.

In some embodiments, the base station further includes a third guide rail and a fourth guide rail, wherein the second guide rail is provided along the bottom edge of the vehicle-mounted display screen, and the third guide rail and the fourth guide rail are connected to the central skeleton and are respectively arranged along two opposite side edges of the vehicle-mounted display screen.

In some embodiments, a height of the central skeleton protruding rearward relative to the vehicle-mounted display screen is greater than a height of the first guide rail or the second guide rail protruding rearward relative to the vehicle-mounted display screen.

In some embodiments, the height of the first guide rail or the second guide rail protruding rearward relative to the vehicle-mounted display screen is greater than a height of the third guide rail or the fourth guide rail relative to the vehicle-mounted display screen.

In some embodiments, the central skeleton includes an upper half and a lower half; the upper half, the first guide rail, the third guide rail and the fourth guide rail form an upper frame; the lower half and the second guide rail form a lower frame, and the upper frame and the lower frame are spliced together with each other.

In some embodiments, the upper frame and the lower frame are coupled by buckle splicing.

In some embodiments, the upper frame and the lower frame are further attracted to each other through magnets.

In some embodiments, the upper half and the lower half of the central skeleton are spliced to form an annular groove, and a mounting base of the vehicle-mounted display screen passes through the annular groove, wherein the mounting base is used for mounting the vehicle-mounted display screen to a vehicle.

In some embodiments, the central skeleton further includes a storage box mounting structure located above the annular groove, and the storage box mounting structure is used to mount a vehicle storage box.

In some embodiments, the mounting portion includes at least one hook coupled to an edge of the vehicle-mounted display screen.

In some embodiments, the at least one hook is fixed to the first guide rail and/or the second guide rail through screws.

In some embodiments, the base station further includes a plurality of foam sheets, one side of the foam sheets is adhered to the first guide rail, the second guide rail and the hook, and the other side of the foam sheets abuts against the back side of the vehicle-mounted display screen.

In some embodiments, the vehicle accessories include a vehicle-mounted mobile phone holder, a vehicle-mounted camera holder, a temporary parking sign holder, a navigation device holder, and a walkie-talkie holder.

According to the base station for mounting vehicle accessories of the embodiment of the present application, the first guide rail and the second guide rail connected to each other are mounted on the back side of the vehicle-mounted display screen via the mounting portion, and multiple vehicle accessories can be mounted simultaneously to the base station for mounting vehicle accessories via the first guide rail and/or the second guide rail to realize the one-to-many mounting function, and avoid multiple contacts with the vehicle-mounted display screen when multiple vehicle accessories are mounted on the vehicle-mounted display screen. As long mount the base station for mounting vehicle accessories to the vehicle-mounted display screen, when users need to remove the vehicle accessories, they only need to remove them from the base station for mounting vehicle accessories, so as to avoid possible damage to the vehicle-mounted display screen when removing the various vehicle accessories from the vehicle-mounted display screen.

### BRIEF DESCRIPTION OF DRAWINGS

In order to illustrate the technical solutions of the embodiments of the present application more clearly, the following briefly introduces the accompanying drawings that need to be used in the description of the embodiments of the present application. Obviously, the drawings in the following description are only some embodiments of the present application. For those of ordinary skill in the art, other drawings can also be obtained from these drawings without creative effort.
FIG. 1 is a schematic structural diagram of back view of a base station for mounting vehicle accessories according to an embodiment of the present application;
FIG. 2 is a schematic structural diagram of front view of a base station for mounting vehicle accessories according to an embodiment of the present application;
FIG. 3 is an exploded schematic diagram of a base station for mounting vehicle accessories according to an embodiment of the present application;
FIG. 4 is a schematic structural diagram of bottom view of a base station for mounting vehicle accessories according to an embodiment of the present application;
FIG. 5 is a schematic structural diagram of a base station for mounting vehicle accessories according to another embodiment of the present application;
FIG. 6 is a schematic structural diagram of a base station for mounting vehicle accessories according to another embodiment of the present application;
FIG. 7 is a schematic structural diagram of a base station for mounting vehicle accessories according to another embodiment of the present application; and
FIG. 8 is a schematic structural diagram of a base station for mounting vehicle accessories according to another embodiment of the present application.

### Description of reference number in the drawings:

1, 2, 3, 4, 5: base station for mounting vehicle accessories;
11, 21, 31, 41, 51: first guide rail;
111: guide rail connection structure;
113: rack;
12, 22, 32, 42, 52: second guide rail;
13, 23, 43: third guide rail;
133: mounting hole;
14, 44: fourth guide rail;
15, 25, 35, 45, 55: mounting portion;
151: hook;
153: screw;
16, 26, 36: central skeleton;
161: upper half;
162: lower half;
163: buckle;
164: upper magnet;
165: lower magnet;
100: upper frame;
200: lower frame;
168: annular groove;
169: storage box mounting structure;
157, 167, 17: foam sheet;
8: vehicle-mounted display screen;
80: mounting base;
81: back side;
821: top edge:
822: bottom edge;
823: left side edge;
824: right side edge;
9a, 9b, 9c, 9d: vehicle accessory;
91: connecting portion.

### DETAILED DESCRIPTIONS

Unless otherwise defined, all technical and scientific terms used herein have the same meanings as commonly understood by those skilled in the technical field belonging to this application; the terms used herein in the specification of the application are for the purpose of describing specific embodiments only. The purpose is not intended to limit the application; the terms "including" and "having" and any variations thereof in the description and claims of the application and the above description of the drawings are intended to cover non-exclusive inclusion. The terms "first", "second", etc. in the description and claims of this application or the above-mentioned drawings are used to distinguish different objects, rather than describing a specific sequence or technical meaning. The terms "connection" and "connections" mentioned in this application include direct and indirect connections (connections) unless otherwise specified.

Additionally, the features, operations, or characteristics described in the specification may be combined in any suitable manner to form various embodiments. At the same time, each step or action in the method description can also be sequentially exchanged or adjusted in a manner that is obvious to those skilled in the art. Therefore, the various sequences in the description and drawings are only for clearly describing a certain embodiment, and do not imply a necessary sequence, unless otherwise stated that a certain sequence must be followed.

The present application will be further described in detail below through specific embodiments in conjunction with the accompanying drawings. In the following embodiments, many details are described in order to make the present application better understood. However, those skilled in the art can readily recognize that some of the features may be omitted in different situations, or may be replaced by other elements, materials, and methods. In some cases, some operations related to the present application are not shown or described in the specification. This is to avoid the core part of the present application being overwhelmed by excessive descriptions. For those skilled in the art, it is difficult to describe these in detail. The relevant operations are not necessary, and they can fully understand the relevant operations based on the descriptions in the instructions and general technical knowledge in the field.

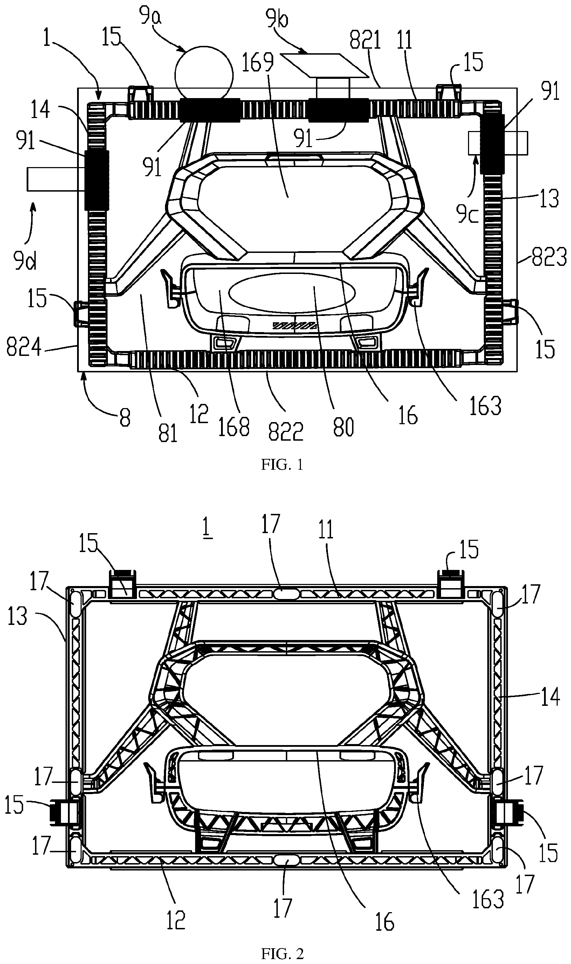

Please refer to FIGs. 1 to 2, which show schematic structural diagrams of a base station for mounting vehicle accessories from a front view and a back view according to an embodiment of the present application. FIG. 1 shows multiple vehicle accessories mounted at the base station at the same time, while FIG. 2 does not show these vehicle accessories. The base station 1 for mounting vehicle accessories is mounted to the vehicle-mounted display screen 8. The base station 1 for mounting vehicle accessories includes a first guide rail 11, a second guide rail 12, a third guide rail 13, a fourth guide rail 14 and a mounting portion 15, wherein the first guide rail 11 is mounted on the back side 81 of the vehicle-mounted display screen 8. Specifically, it can be arranged along the top edge 821 of the vehicle-mounted display screen. The second guide rail 12 is mounted on the back side 81 of the vehicle-mounted display screen 8 and is arranged along the bottom edge 822 of the vehicle-mounted display screen. Similarly, the third guide rail 13 and the fourth guide rail 14 are mounted on the back side 81 of the vehicle-mounted display screen 8 and are arranged along the opposite sides of the vehicle-mounted display screen, in particular, are arranged along the left side 823 and the right side 824 respectively. The first guide rail 11, the second guide rail 12, the third guide rail 13 and the fourth guide rail 14 are used to mount multiple vehicle accessories at the same time, for example vehicle accessories 9a, 9b, 9c and 9d can be mounted simultaneously on the base station 1. The mounting portion 15 is connected to the first guide rail 11, the third guide rail 13 and the fourth guide rail 14, and the first guide rail 11, the second guide rail 12, the third guide rail 13 and the fourth guide rail 14 are fixed to the vehicle-mounted display screen 8 via the mounting portion 15.

In an embodiment, the vehicle-mounted display screen 8 is the central control screen of the vehicle and fixed to the vehicle body via a mounting base 80 connected to the back side 81 of the vehicle-mounted display screen 8. The location of the mounting base 80 is usually located in the center area of the back side 81, which, however, is not limited in this application. The mounting base 80 can be an inclined support arm structure or other forms of support structures. The back side 81 of the vehicle-mounted display screen 8 is at a certain distance from the vehicle body. When in use, it is only necessary to install the base station 1 for mounting vehicle accessories to the vehicle-mounted display screen 8 at one time, and then various required vehicle accessories can be mounted on the base station 1 or removed from the base station 1, so as to satisfy the user's needs for a variety of vehicle accessories with different functions without causing damage to the vehicle-mounted display screen 8. In addition, via the base station 1, a variety of vehicle accessories with different functions can be centrally mounted behind the central control screen to facilitate user use and management. The overall layout of the in-car equipment will be clearer and tidier, and thus improves the user's driving experience. In addition, the base station 1 for mounting vehicle accessories is mounted behind the vehicle-mounted display screen 8 in the form of a frame structure. The guide rails located on the back side of the vehicle-mounted display screen 8 can facilitate users to mount various bracket-type vehicle accessories to the base station conveniently. The structure of the frame-type base frame can further ensure better stability when mounted on the vehicle-mounted display screen 8, prevents shaking and vibration caused during driving, and reduces the resulting abnormal noise and risk of falling.

The base station 1 for mounting vehicle accessories further includes a central skeleton 16 located on the back side 81 of the vehicle-mounted display screen 8, and the first guide rail 11, the second guide rail 12, the third guide rail 13 and the fourth guide rails 14 are all connected to the central skeleton 16, via which the interconnection between the guide rails can be realized. However, the connected guide rails can also be directly connected, for example, the first guide rail 11 could be directly connected to the third guide rail 13 and the fourth guide rail 14. By deployment of the central skeleton 16, the overall structural strength of the base station 1 for mounting vehicle accessories can be improved, and the overall coverage of the vehicle-mounted display screen 8 can be improved. In addition, products such as in-vehicle storage boxes and racks can be mounted on the central skeleton 16 to further expand the functions of the base station 1 for mounting vehicle accessories.

The plurality of vehicle accessory 9a to 9d can be moved along the guide rails, on which they are mounted, to change their positions. Specifically, the vehicle accessories 9a~9d clamps the first guide rail 11, the third guide rail 13, or the fourth guide rail 14 via their respective connecting portions 91, and can be moved back and forth along the rails to which it is coupled under the action of external force. As an example, the structure of the connecting portion 91 is configured to adapt to the cross-sectional shape of the guide rail, and the connecting portion 91 is coupled to the guide rail to mount the vehicle accessory. For example, the vehicle accessories 9a and 9b can slide left and right on the first guide rail 11 to stay at the position that the user thinks they prefer. The vehicle accessories 9c and 9d can slide up and down on the third guide rail 13 and the fourth guide rail 14 respectively to stay at the required position, thus, the position of the vehicle accessories can be independently adjusted by sliding them on the guide rail without derailing (no need to remove the vehicle accessory). In addition, combining with the rotation function of the vehicle accessory itself, a variety of functions can be realized by mounting and cooperative use of functional equipment in order to satisfy more personalized needs of users. As an example, the scenarios include but not limited to the ones described as follow: the co-pilot passenger is interested in the display content of the mobile phone mounted on the vehicle item 9b, and the passenger slides the vehicle item 9b along the first guide rail 11 to a position closer to the passenger to make it convenient for the passenger to check out the content of the mobile phone; the vehicle accessory 9d is a temporary parking sign. When the driver temporarily stops and gets off the car, the vehicle accessory 9d can be slid to a relatively upper position along the fourth guide rail 14 so that people outside the vehicle can easily see the information of the temporary parking sign, and when the driver returns to the vehicle, he can slide it to a relatively lower position to reduce interference with the driving vision, and so on. Although the illustration of the drawings only shows the mounting of vehicle accessories on some guide rails, it does not mean that other guide rails cannot be mounted. All guide rails can be used to mount vehicle accessories and allow the vehicle accessories to slide and reside in the required position. The specific shape of the connecting portion 91 can be adjusted according to the structure of the guide rails. When the first guide rail 11, the second guide rail 12, the third guide rail 13 and the fourth guide rail 14 of the base station 1 have basically the same structure, the structure of the connecting portion 91 of various brackets-like vehicle accessory products can be unified. For manufacturers of bracket-like vehicle accessories, the connecting portion 91 can be molded in a unified manner to reduce design and production costs.

The first guide rail 11, the second guide rail 12, the third guide rail 13 and the fourth guide rail 14 respectively include a guide rail connection structure 111, and the multiple vehicle accessories 9a~ 9d respectively include a connecting portion 91. The connecting portion 91 is adapted to couple to the guide rail connection structure 111 to mount the multiple vehicle accessories 9a ~ 9d to the first guide rail 11, the second guide rail 12, the third guide rail 13 or the fourth guide rail 14. As an example, the guide rail connection structure 111 includes a rack 113 provided on the surfaces of the second guide rail 12, the third guide rail 13 and the fourth guide rail 14. The racks 1 to 13 can be continuously distributed at certain intervals along the length of the guide rail. Correspondingly, the connecting portion 91 of the vehicle accessory comprises a bulge structure corresponding to the gap between the adjacent racks 1 to 13. The cooperation of the bulge structure and the gap can strengthen the stability of the vehicle accessory when the vehicle accessory is mounted and resides on the guide rail.

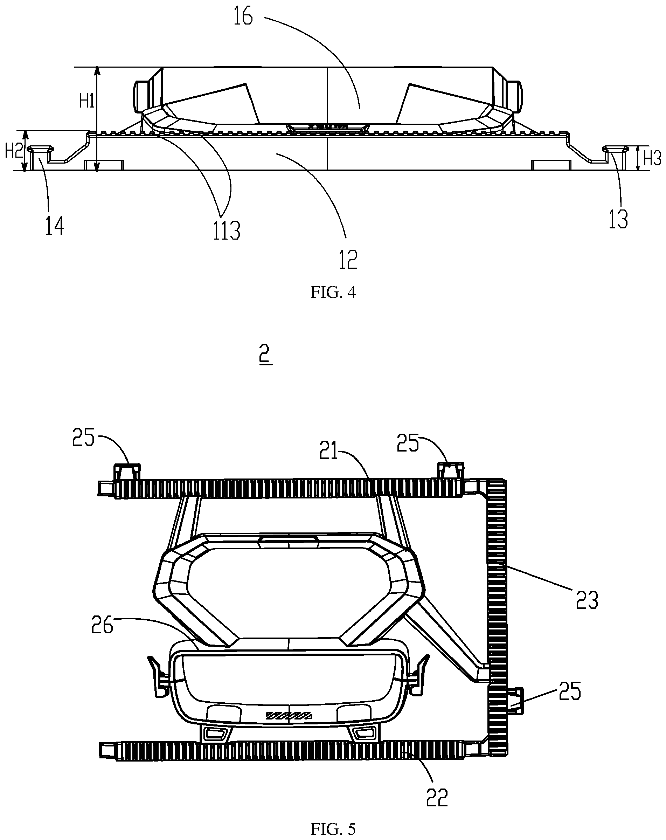

Please refer to FIG. 4, which is a schematic structural diagram of bottom view of the base station 1 for mounting vehicle accessories according to an embodiment of the present application. The height H1 of the central skeleton 16 protruding rearward relative to the vehicle-mounted display screen 8 is greater than the height H2 of the first guide rail 11 and the second guide rail 12 protruding rearward relative to the vehicle-mounted display screen 8. The height H2 of the first guide rail 11 or the second guide rail 12 protruding rearward relative to the vehicle-mounted display screen 8 is greater than the height H3 of the third guide rail 13 and the fourth guide rail 14 protruding rearward relative to the vehicle-mounted display screen 8. By the difference between the heights of the central skeleton 16 and the guide rails and the difference between the heights of the adjacent guide rails, make the operation of mounting a variety of vehicle accessories at the same time more convenient and reduce mutual interference between the vehicle accessories.

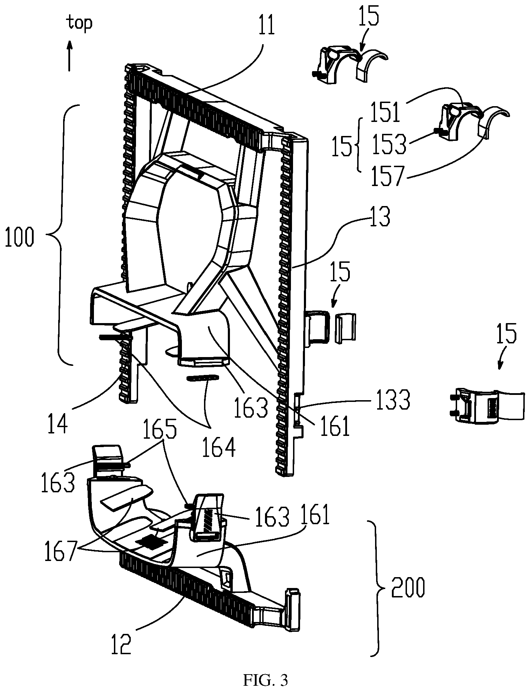

Please refer to FIG. 3, which is an exploded schematic diagram of the base station 1 for mounting vehicle accessories according to an embodiment of the present application. In some embodiments, the base station 1 for mounting vehicle accessories comprises different parts that are spliced together. Specifically, the central skeleton 16 includes an upper half 161 and a lower half 162. The upper half 161, the first guide rail 11, the third guide rail 13 and the fourth guide rail 14 form an upper frame 100, the lower half 162, the second guide rail 12 form a lower frame 200. The upper frame 100 and the lower frame 200 are spliced and fixed to each other to form the base station for mounting vehicle accessories shown 1. As an example, the upper frame 100 and the lower frame 200 can be respectively integrally molded frame structures. Such a design can save users from the trouble of assembling dozens or hundreds of parts, and the installation only requires two simple steps.

The upper half 161 and the lower half 162 of the central skeleton 16 are spliced together to form an annular groove 168, and the mounting base 80 of the vehicle-mounted display screen 8 passes through the annular groove 168. When mounting the base station 1 for mounting vehicle accessories with a splicing structure described above, the upper frame 100 and the lower frame 200 can be mounted on the vehicle-mounted display screen 8 from two opposite directions, and the mounting base 80 passes through the annular groove 168 formed by the upper frame 100 and the lower frame 200, so as to avoids the obstruction of the mounting base 80 on the back side 81 of the vehicle-mounted display screen 8 during the installation, thus the mounting of the base station 1 for mounting vehicle accessories could be successfully completed.

Furthermore, the upper frame 100 and the lower frame 200 are spliced and fixed through buckles 163 located on the upper half 161 and the lower half 162. Although the buckles of the upper frame 100 and the buckles of the lower frame 200 are both named buckles 163 in the accompanying drawings, it should be understood that the buckles of the upper frame 100 and the buckles of the lower frame 200 are not the same structure, but coupling with corresponding buckles. The upper frame 100 and the lower frame 200 can be tightly coupled through the buckles 163, so that the base station 1 for mounting vehicle accessories can bear the higher load.

As an example, the upper frame 100 and the lower frame 200 could also be attracted to each other via magnets. Grooves (not marked) for accommodating the upper magnet 164 and the lower magnet 165 are respectively provided at the corresponding splicing portions of the upper half 161 and the lower half 162. The polarity of the upper magnet 164 and the lower magnet 165 are opposite. When the upper frame 100 and the lower frame 200 are assembled and attached, the mutual attraction between the upper magnet 164 and the lower magnet 165 can guide the alignment of the upper frame 100 and the lower frame 200, It is convenient for the user to mount the base station 1 for mounting vehicle accessories to the back side 81 of the vehicle-mounted display screen 8 from the front of the vehicle-mounted display screen 8. In addition, after the upper frame 100 and the lower frame 200 are spliced together, the magnetic attraction between magnets can provide additional reinforcement.

In some embodiments, the central skeleton 16 further includes a storage box mounting structure 169 located above the annular groove 168, and the storage box mounting structure 169 is used to mount an in-vehicle storage box. The storage box mounting structure 169 may be a slot, a through hole, or other structure that can couple with the mounting portion of the vehicle storage box or storage rack. By arranging the storage box mounting structure 169 above the annular groove 168, the mounting base 80 passing through the annular groove 168 can be reasonably dodged, and at the same time, this space can be fully utilized to place some sundries.

In some embodiments, the mounting portion 15 may be a hook structure, and the at least one hook 151 is coupled to the edge of the vehicle-mounted display screen 8. Specifically, the inside of the hook 151 abuts against the edge of the vehicle-mounted display screen 8, or the hook hooks the edge of the vehicle-mounted display screen 8. The number and position of the hooks 151 can be set as needed. As an example, as shown in FIG. 1, the base station 1 for mounting vehicle accessories includes four mounting portions 15, and each mounting portion includes a hook 151. Two of the hooks 151 are connected to the first guide rail 11 and are used to hook the upper edge of the vehicle-mounted display screen 8; the other two hooks 151 are respectively located on the third guide rail 13 and the fourth guide rail 14. And are used to hook the left side edge and the right side edge of the vehicle-mounted display screen 8 respectively, so that these hooks 151 hook the vehicle-mounted display screen 8 from three different directions, as if base station 1 for mounting vehicle accessories was embedded in the back side 81 of the vehicle-mounted display screen 8, thereby allowing the base station 1 for mounting vehicle accessories to be firmly mounted in the vehicle, reducing shaking during driving or vibration impact on the vehicle-mounted display screen 8, and improving reliability and user experience of base station product.

In some embodiments, the at least one hook 151 is fixed to the first guide rail 11, the third guide rail 13 and the fourth guide rail 14 through screws 153. Mounting holes can be provided on the guide rail at positions corresponding to the screws 153. For example, a mounting hole 133 is provided on the side surface of the third guide rail 13 for mounting a hook 151 corresponding to the third guide rail 13. However, the hook 151 can also be integrally formed with the first guide rail 11 and other guide rails.

Please refer to FIG. 2 and 3 again. The base station 1 for mounting vehicle accessories can also include a plurality of foam sheets 17, one side of each foam sheet 17 is pasted on the first guide rail 11, the second guide rail 12, the third track 13 or the fourth guide rail 14, the other surface of each foam sheet 17 abuts against the back side 81 of the vehicle-mounted display screen 8. By deploying a plurality of foam sheets 17 between the guide rails and the vehicle-mounted display screen 8, the relatively rigid guide rails can be isolated from the vehicle-mounted display screen 8 to avoid direct contacting with the surface of the vehicle-mounted display screen 8, and can further reduce damage to the vehicle-mounted display screen 8. Similarly, a foam sheet 157 can also be pasted on the surface of hook 151 that is coupled to the vehicle-mounted display screen 8, so as to avoid scratching the surface of the vehicle-mounted display screen 8 at the corresponding position. In addition, a plurality of foam sheets 167 are pasted inside the annular groove 168 to protect the surface of the mounting base 80 that is close to the annular groove 168 from being damaged. The foam sheets 17, 157 and 167 can also prevent the base station 1 for mounting vehicle accessories from vibrating and colliding with the vehicle-mounted display screen 8 to produce abnormal noise during driving, thereby improving the driving experience. As an example, the foam sheets 17, 157 and 167 may be EVA foam and fixed to the vehicle mounting base station 1 via 3M glue.

In the embodiment of the present application, each one of the vehicle accessories 9a to 9d might specifically be a vehicle-mounted mobile phone holder, a vehicle-mounted camera holder, a temporary parking sign holder, a navigation device holder or an intercom holder, etc. The vehicle-mounted mobile phone holder might be used to mount and fix various mobile phones. The camera bracket might be used to fix electronic equipment such as sports cameras. Multiple vehicle accessories might have the same structure of the connecting portion 91 and be mounted to the base station 1 for mounting vehicle accessories through the same mounting method, so that the mounting method can be unified for better maneuverability, and the overall style is unified for better visual effect.

Please refer to FIG. 5, which is a schematic structural diagram of a base station for mounting vehicle accessories according to another embodiment of the present application. In this example, the base station for mounting vehicle accessories 2 is roughly the same as the base station 1 for mounting vehicle accessories, and the main difference is that one guide rail is relatively reduced. Specifically, the base station for mounting vehicle accessories 2 includes a first guide rail 21, a second guide rail 22, a third guide rail 23, a mounting portion 25 and a central skeleton 26. The first guide rail 21 is mounted on the back side of the vehicle-mounted display screen and is arranged along the top edge of the vehicle-mounted display screen; the second guide rail 22 is mounted on the back side of the vehicle-mounted display screen close to the bottom edge, and is connected to the first guide rail 21 through the central skeleton 26; the third guide rail 23 is mounted on the back side of the vehicle-mounted display screen close to the side edge, and is connected to the central skeleton 26. The first guide rail 21, the second guide rail 22 and the third guide rail 23 are used to mount multiple vehicle accessories at the same time (not shown). The mounting portion 25 is connected to the first guide rail 21 and the third guide rail 23.

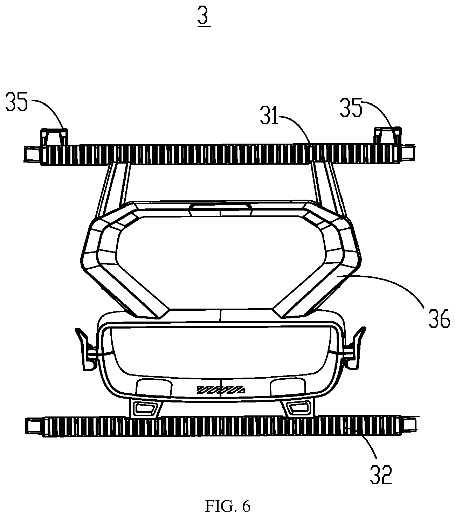

Please refer to FIG. 6, which is a schematic structural diagram of a base station for mounting vehicle accessories according to another embodiment of the present application. The base station for mounting vehicle accessories 3 is roughly the same as the base station 1 for mounting vehicle accessories. The main difference is that two guide rails are relatively reduced, and two relatively parallel guide rails at the top and bottom are retained. Specifically, the base station for mounting vehicle accessories 3 mainly includes a first guide rail 31, a second guide rail 32, a mounting portion 35 and a central skeleton 36. The first guide rail 31 is mounted on the back side of the vehicle-mounted display screen and along the top edge of the vehicle-mounted display screen; the second guide rail 32 is mounted on the back side of the vehicle-mounted display screen close to the bottom edge and is connected to the first guide rail 31 via the central skeleton 36. The first guide rail 31 and the second guide rail 32 are used to mount multiple vehicle accessories at the same time (not shown). The mounting portion 35 is connected to the first guide rail 31.

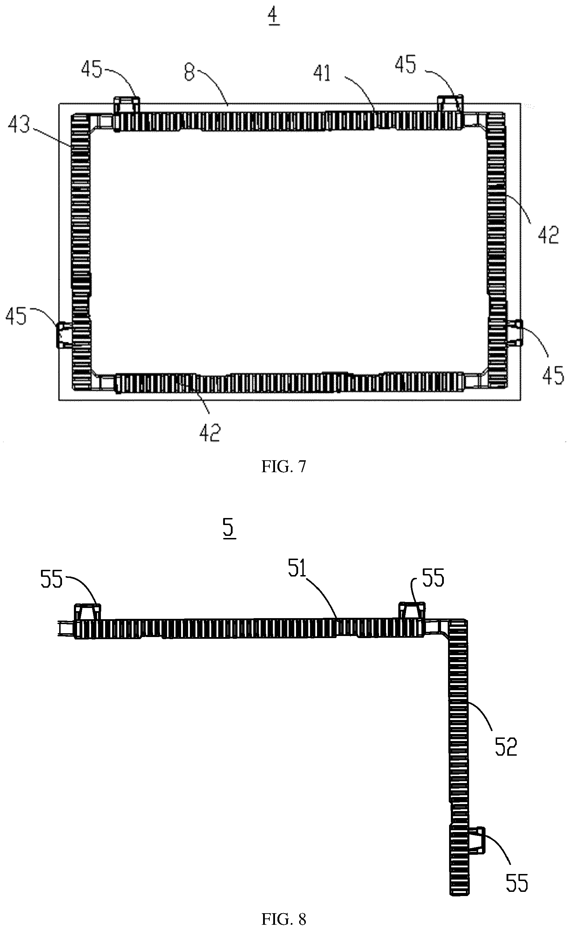

Please refer to FIG. 7, which is a schematic structural diagram of a base station for mounting vehicle accessories according to another embodiment of the present application. The base station for mounting vehicle accessories 4 is roughly the same as the base station 1 for mounting vehicle accessories. The main difference is that the central skeleton is removed, so that the base station for mounting vehicle accessories 4 appears as a hollow square frame structure as a whole. Specifically, the base station for mounting vehicle accessories 4 mainly includes a first guide rail 41, a second guide rail 42, a third guide rail 43, a fourth guide rail 44 and a mounting portion 45. The first guide rail 41, the second guide rail 42, the third guide rail 43 and the fourth guide rail 44 are mounted on the back side of the vehicle-mounted display screen and are respectively arranged along the four edges of the vehicle-mounted display screen. The first guide rail 41, the second guide rail 42, the third guide rail 43 and the fourth guide rail 44 are used to mount multiple vehicle accessories at the same time (not shown). The mounting portion 45 is provided on the first guide rail 41, the third guide rail 43 and the fourth guide rail 44.

Please refer to FIG. 8, which is a schematic structural diagram of a base station for mounting vehicle accessories according to another embodiment of the present application. The base station for mounting vehicle accessories 5 is a further deformation based on the base station for mounting vehicle accessories 4. Two guide rails are reduced from the base station for mounting vehicle accessories 4, leaving only two connected guide rails in the horizontal direction and the vertical direction. Specifically, the base station for mounting vehicle accessories 5 mainly includes a first guide rail 51, a second guide rail 52 and mounting portions 55. The first guide rail 51 and the second guide rail 52 are mounted on the back side of the vehicle-mounted display screen and are respectively arranged along the top edge and side edge of the vehicle-mounted display screen. The second guide rail 52 is connected to the first guide rail 51 and the mounting portions 55 are connected to the first guide rail 51 and the second guide rail 52.

As an example, in the aforementioned embodiments, the guide rails, hooks, and buckles of each base station for mounting vehicle accessories can be made of nylon and glass fiber.

In the base station for mounting vehicle accessories of the present application, the first guide rail and the second guide rail connected to each other are mounted on the back side of the vehicle-mounted display screen through the mounting portion, and multiple vehicle accessories can be mounted on the vehicle-mounted display screen at the same time via the first guide rail and/or the second guide rail. The base station for mounting vehicle accessories realizes the one-to-many mounting function to meet users' more personalized driving or riding needs, and can avoid multiple contacts with the vehicle-mounted display screen when multiple vehicle accessories are mounted on the vehicle-mounted display screen. You only need to mount the base station for mounting vehicle accessories to the vehicle-mounted display screen at one time, and when it is necessary to remove the base station for mounting vehicle accessories, users only need to remove them from the base station for mounting vehicle accessories, which reduces damage to the vehicle-mounted display screen when removing various vehicle accessories from the vehicle-mounted display screen.

This document is described with reference to various exemplary embodiments. However, those skilled in the art will recognize that changes and modifications can be made to the exemplary embodiments without departing from the scope herein. For example, the various operational steps, as well as the components used to perform the operational steps, may be implemented in different ways (e.g., one or more steps may be eliminated, modified or incorporated into other steps).

Although the principles herein have been illustrated in various embodiments, many modifications of structure, arrangement, proportion, elements, materials and parts as are particularly suited to particular circumstances and operating requirements may be made without departing from the principles and scope of the disclosure. For internal use. The above modifications and other changes or revisions are intended to be included within the scope of this document.

The foregoing detailed description has been described with reference to various embodiments. However, those skilled in the art will recognize that various modifications and changes can be made without departing from the scope of the disclosure. Accordingly, this disclosure is to be considered in an illustrative and not a restrictive sense, and all such modifications are to be included within its scope. Likewise, advantages, other advantages, and solutions to problems with respect to various embodiments have been described above. However, benefits, advantages, solutions to problems, and any elements that produce these, or make the solution more explicit, are not to be construed as critical, required, or necessary. As used herein, the term "comprises" and any other variations thereof are intended to be non-exclusively inclusive such that a process, method, or apparatus that includes a list of elements includes not only those elements, but also includes those that are not expressly listed or are not part of the process, method, other elements of the system or equipment. Furthermore, the term "coupled" and any other variations thereof as used herein refers to physical connection, electrical connection, magnetic connection, optical connection, communication connection, functional connection and/or any other connection.

Those skilled in the art will recognize that many changes may be made to the details of the embodiments described above without departing from the basic principles of the application. Accordingly, the scope of the application should be determined by the following claims.

## Claims

1. A base station for mounting vehicle accessories, comprising:
a first guide rail mounted on a back side of a vehicle-mounted display screen;
a second guide rail mounted on the back side of the vehicle-mounted display screen and connected to the first guide rail, wherein the first guide rail and the second guide rail are used to mount a plurality of vehicle accessories at the same time; and
a mounting portion connected to at least one of the first guide rail and the second guide rail, wherein the first guide rail and the second guide rail are fixed to the vehicle-mounted display screen via the mounting portion.

2. The base station for mounting vehicle accessories according to claim 1, wherein the vehicle accessories are adapted to move along the first guide rail or the second guide rail to change a holding position.

3. The base station for mounting vehicle accessories according to claim 2, wherein the vehicle accessories clamp or are clamped by the first guide rail and/or the second guide rail and configured to slide along the first guide rail and/or the second guide rail when an external force is applied.

4. The base station for mounting vehicle accessories according to claim 1, wherein the first guide rail or the second guide rail comprises a guide rail connection structure, and each of the vehicle accessories respectively comprises a connecting portion, and the connecting portion is structural adapted with the guide rail connection structure as to mount the multiple vehicle accessories to the first guide rail and/or the second guide rail.

5. The base station for mounting vehicle accessories according to claim 4, wherein the guide rail connection structure is a rack provided on a surface of the first guide rail and/or the second guide rail.

6. The base station for mounting vehicle accessories according to claim 1, wherein the first guide rail is provided along a top edge of the vehicle-mounted display screen, and the second guide rail is provided along a bottom edge or a side edge of the vehicle-mounted display screen.

7. The base station for mounting vehicle accessories according to claim 6, further comprising a central skeleton located on the back side of the vehicle-mounted display screen, and the second guide rail is connected to the first guide rail through the central skeleton.

8. The base station for mounting vehicle accessories according to claim 7, further comprising a third guide rail and a fourth guide rail, wherein the second guide rail is provided along the bottom edge of the vehicle-mounted display screen, and the third guide rail and the fourth guide rail are connected to the central skeleton and are respectively arranged along two opposite side edges of the vehicle-mounted display screen.

9. The base station for mounting vehicle accessories according to claim 8, wherein a height of the central skeleton protruding rearward relative to the vehicle-mounted display screen is greater than a height of the first guide rail or the second guide rail protruding rearward relative to the vehicle-mounted display screen; and/or a height of the first guide rail or the second guide rail protruding rearward relative to the vehicle-mounted display screen is greater than a height of the third guide rail or the fourth guide rail relative to the vehicle-mounted display screen..

10. The base station for mounting vehicle accessories according to claim 8, wherein the central skeleton comprises an upper half and a lower half; the upper half, the first guide rail, the third guide rail and the fourth guide rail form an upper frame; the lower half and the second guide rail form a lower frame, and the upper frame and the lower frame are spliced together with each other or the upper frame and the lower frame are coupled by buckle splicing; and/or the upper half and the lower half of the central skeleton are spliced to form an annular groove, and a mounting base of the vehicle-mounted display screen passes through the annular groove, wherein the mounting base is used for mounting the vehicle-mounted display screen to a vehicle.

11. The base station for mounting vehicle accessories according to claim 10, wherein the upper frame and the lower frame are further attracted to each other through magnets.

12. The base station for mounting vehicle accessories according to claim 10, wherein the central skeleton further comprises a storage box mounting structure located above the annular groove, and the storage box mounting structure is used to mount a vehicle storage box.

13. The base station for mounting vehicle accessories according to claim 1, wherein the mounting portion comprises at least one hook coupled to an edge of the vehicle-mounted display screen.

14. The base station for mounting vehicle accessories according to claim 13, wherein the at least one hook is fixed to the first guide rail and/or the second guide rail through screws; and/or the base station further comprises a plurality of foam sheets, one side of the foam sheets is adhered to the first guide rail, the second guide rail and the hook, and the other side of the foam sheets abuts against the back side of the vehicle-mounted display screen.

15. The base station for mounting vehicle accessories according to any one of claims 1-14, wherein the vehicle accessories comprise a vehicle-mounted mobile phone holder, a vehicle-mounted camera holder, a temporary parking sign holder, a navigation device holder, and a walkie-talkie holder.
